(19) **Europäisches Patentamt / European Patent Office / Office européen des brevets**

(11) **EP 4 757 312 A1**

(12) **EUROPEAN PATENT APPLICATION**

(43) Date of publication:
**10.06.2026 Bulletin 2026/24**

(21) Application number: **24307038.0**

(22) Date of filing: **05.12.2024**

(51) International Patent Classification (IPC):
**H04N 19/593** (2014.01)  **H04N 19/105** (2014.01)
**H04N 19/176** (2014.01)

(52) Cooperative Patent Classification (CPC):
**H04N 19/593; H04N 19/105; H04N 19/176**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **BORDES, Philippe**
  **35890 LAILLE (FR)**
• **ROBERT, Antoine**
  **35140 MEZIERES SUR COUESNON (FR)**
• **GALPIN, Franck**
  **35235 THORIGNE-FOUILLARD (FR)**
• **RATH, Gagan Bihari**
  **35000 RENNES (FR)**

(74) Representative: **Vossius & Partner Patentanwälte Rechtsanwälte mbB Siebertstraße 3 81675 München (DE)**

(54) **SPANNING INTRA PREDICTION MODE INFORMATION FROM RECONSTRUCTED CODING UNITS**

(57) Systems and method directed to spanning intra prediction mode information using reconstructed coding unis. One example is directed to a computer-implemented method for video encoding or decoding including deriving intra prediction mode -IPM- information from one or more reconstructed samples of a coding unit, storing the IPM information in an IPM buffer corresponding to the coding unit, and encoding or decoding a picture including the coding unit based on the IPM buffer.

500

510  DERIVE IPM INFORMATION FROM RECONSTRUCTED SAMPLE(S) OF CU

520  STORE IPM INFORMATION IN IPM BUFFER CORRESPONDING TO CU

530  ENCODE OR DECODE A PICTURE INCLUDING CU BASED ON IPM BUFFER

**FIG. 5**

EP 4 757 312 A1

## EP 4 757 312 A1

**Description**

**BACKGROUND**

The present application is related to video encoding and decoding, and, in particular, spanning intra prediction mode information.

**BRIEF SUMMARY**

Briefly stated, in one embodiment computer-implemented method for video encoding or decoding includes deriving intra prediction mode -IPM- information from one or more reconstructed samples of a coding unit, storing the IPM information in an IPM buffer corresponding to the coding unit, and encoding or decoding a picture including the coding unit based on the IPM buffer.

In some embodiments, the techniques described herein related to a non-transitory computer-readable medium comprising instructions that, when executed by an electronic processor, causes the electronic processor to derive intra prediction mode -IPM- information from one or more reconstructed samples of a coding unit, store the IPM information in an IPM buffer corresponding to the coding unit, and encode or decode a picture including the coding unit based on the IPM buffer.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG. 4 is a flowchart of an example method for video encoding or decoding according to one or more embodiments of the present disclosure;

FIG. 5 is a flowchart of an example method for video encoding or decoding according to one or more embodiments of the present disclosure;

FIG. 6 illustrates an example of an intra prediction mode buffer grid size according to one or more embodiments of the present disclosure;

FIG. 7 is a flowchart of an example method for decoder intra mode derivation according to one or more embodiments of the present disclosure;

FIG. 8 illustrates an example frame for decoder intra mode derivation according to one or more embodiments of the present disclosure;

FIG. 9 illustrates an example primary and second modes and blending for decoder intra mode derivation according to one or more embodiments of the present disclosure;

FIG. 10 illustrates an example method for deriving IPM information using histogram of gradients according to one or more embodiments of the present disclosure;

FIG. 11 is a flowchart of an example method for deriving IPM information from a reference block for a CU coded using inter prediction mode according to one or more embodiments of the present disclosure;

FIG. 12 illustrates a luma mapping with chroma scaling process in a decoder for luma and chroma components according to one or more embodiments of the present disclosure;

FIG. 13 is a flowchart of an example method for video encoding or decoding according to one or more embodiments of the present disclosure; and

FIG. 14 is a flowchart of an example method for video encoding or decoding according to one or more embodiments of the present disclosure.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

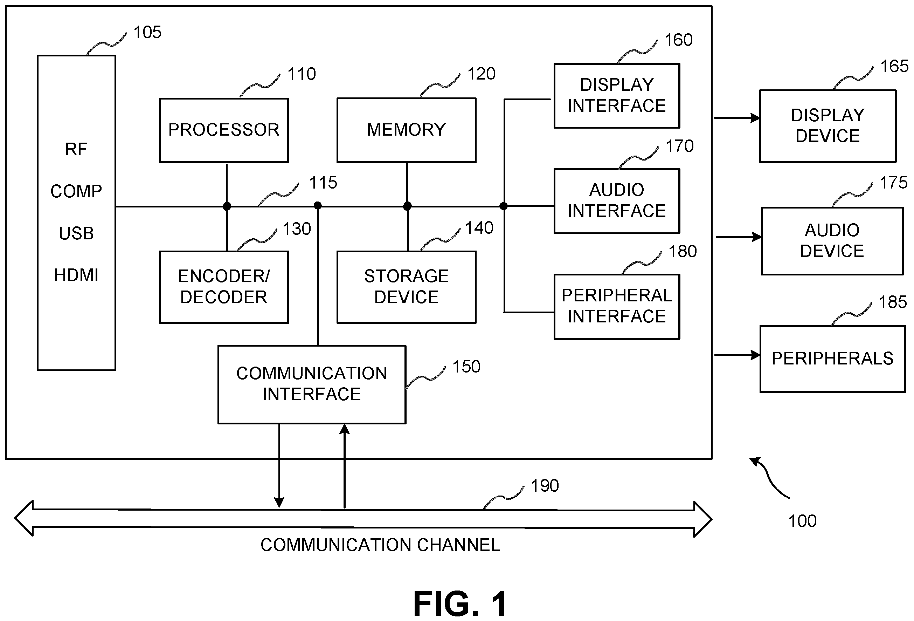

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

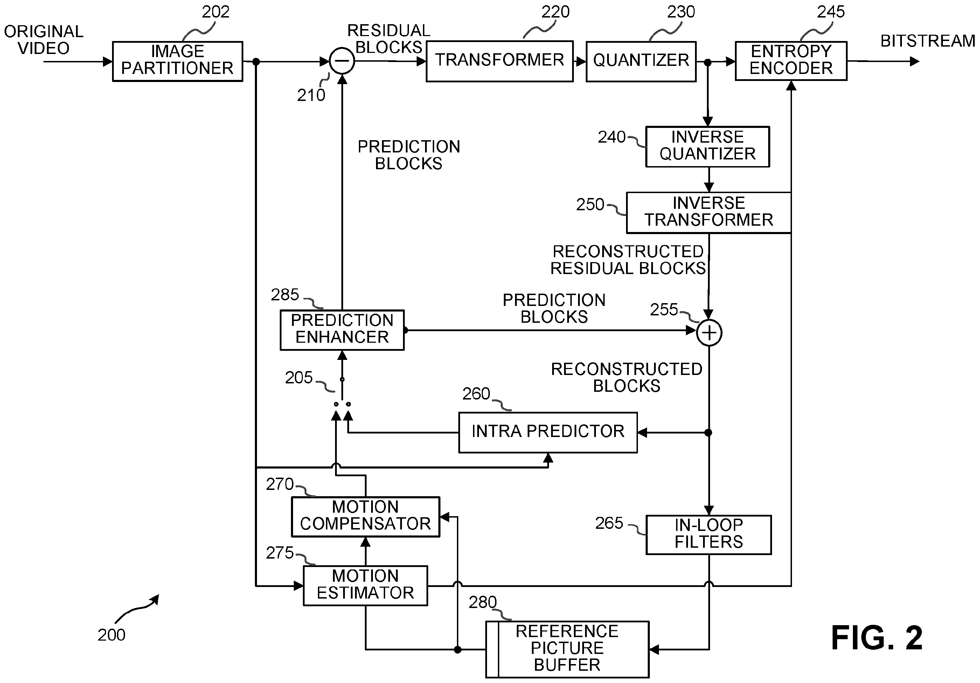

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

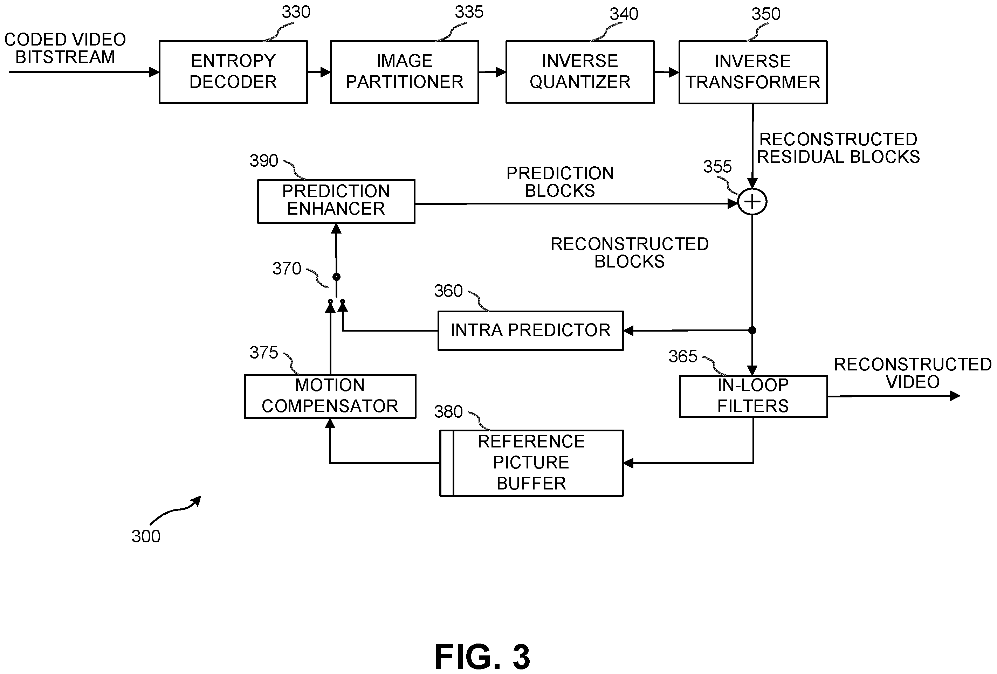

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

As discussed above, CUs may be coded (i.e., encoded and/or decoded) using an intra prediction mode or an inter prediction mode. When a CU is coded using an intra prediction mode, the intra prediction mode (IPM) (e.g., the type of intra prediction mode) used to code the CU is stored in a buffer associated with the frame of the CU (referred to herein as an "IPM buffer" storing IPM information). When the CU is coded using inter prediction mode, one motion vector may be used to propagate the IPM information from the IPM buffer of the reference frame using motion compensation and store the IPM information into the IPM buffer of the current picture. The IPM buffer storage is kept with the reference pictures, for example, similar to the decoder picture buffer (DPB). The IPM buffer storage is made of cells of predefined (reduced) size (e.g. 4x4). The IPM information values are stored at this fixed pre-defined grid resolution.

IPM information stored in the IPM buffer may be used, for example, to build the list of the most probable intra prediction modes (MPM) in case of a current CU coded using an intra prediction mode. The IPM used to decode some samples in the reference picture is made available for the subsequent pictures. In intra prediction mode, a list of intra prediction modes candidates is built and an index of the candidate to use is signaled. The list of candidates includes the most probable modes (MPMs) built with the intra prediction mode used by the neighboring reconstructed CUs coded using the intra prediction mode and with a propagated intra prediction mode associated with the neighboring reconstructed CUs coded using the inter prediction mode.

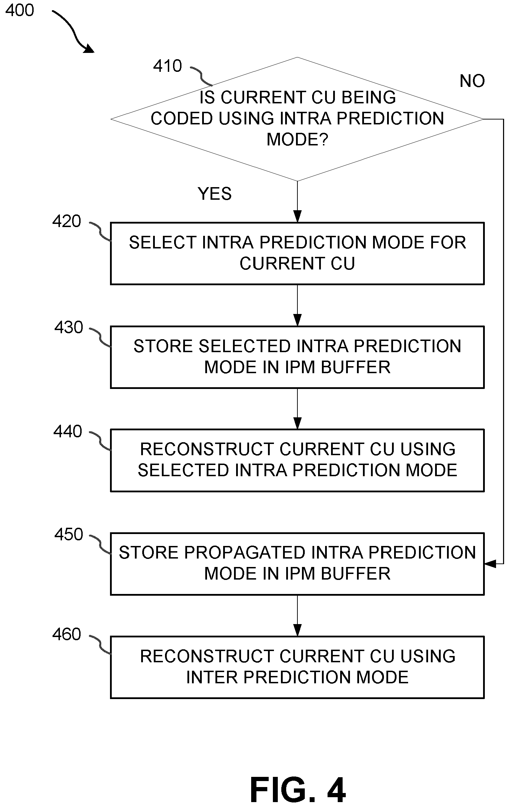

FIG. 4 is a flowchart of an example method 400 for video encoding or decoding that is discussed above according to some embodiments. As an example, the method 400 described herein is performed by an encoder 200 (shown in FIG. 2) or by a decoder 300 (shown in FIG. 3). The method 400 is described herein as being performed by an electronic processor (e.g., processor 110) of the encoder 200 or the decoder 300.

At block 410, the method 400 includes determining whether the current CU is being coded using intra prediction mode. The electronic processor may first determine whether the current CU is being coded using an intra prediction mode or an inter prediction mode. When the current CU is determined as being coded in intra prediction mode, the method proceeds to block 420. When the current CU is determined as being coded in inter prediction mode, the method proceeds to blocks 450 and 460.

At block 420, the method 400 includes selecting an intra prediction mode for the current CU. The electronic processor may generate a list of most probable intra prediction modes (MPMs) for the current CU from the IPM buffer. An intra prediction mode is selected from the list of MPMs for coding the current CU. The index of the selected intra prediction mode is used in the coding process of the current CU.

At block 430, the method 400 includes storing the selected intra prediction mode in the IPM buffer. The electronic processor stores the selected intra prediction mode in the IPM buffer, which may be used in coding subsequent CUs.

At block 440, the method 400 includes reconstructing the current CU using the selected intra prediction mode. The electronic processor uses the selected intra prediction mode from the list of MPMs to reconstruct the current CU. As noted above, the index for the selected intra prediction mode is signaled, which is used by the electronic processor to reconstruct the current CU.

At block 450, the method 400 include storing a propagated intra prediction mode in the IPM buffer. When the current CU is being coded using inter prediction mode, an intra prediction mode may be propagated as a motion vector using motion compensation. The propagated intra prediction mode is stored in the IPM buffer corresponding to the current CU.

At block 460, the method 400 includes reconstructing the current CU using inter prediction mode. The electronic processor codes the current CU using inter prediction mode. The block of the method 400 may not be performed in the above order unless otherwise specified. Some of the blocks may be performed simultaneously, for example, blocks 430 and 440 may be performed simultaneously or in a different order and blocks 450 and 460 may be performed simultaneously or in a different order.

In the method 400, the intra prediction modes are derived prior to reconstruction of the current CU. The selected intra prediction mode (i.e., IPM information) may correspond to the primary intra mode direction of the current CU. The prediction samples of the current CU are adjusted using coded residuals when the current CU is being reconstructed, which may change the dominant direction of the reconstructed block such that the IPM information may no longer be appropriate. Therefore, coding quality may be improved by driving the IPM information from a reconstructed CU as shown method 500.

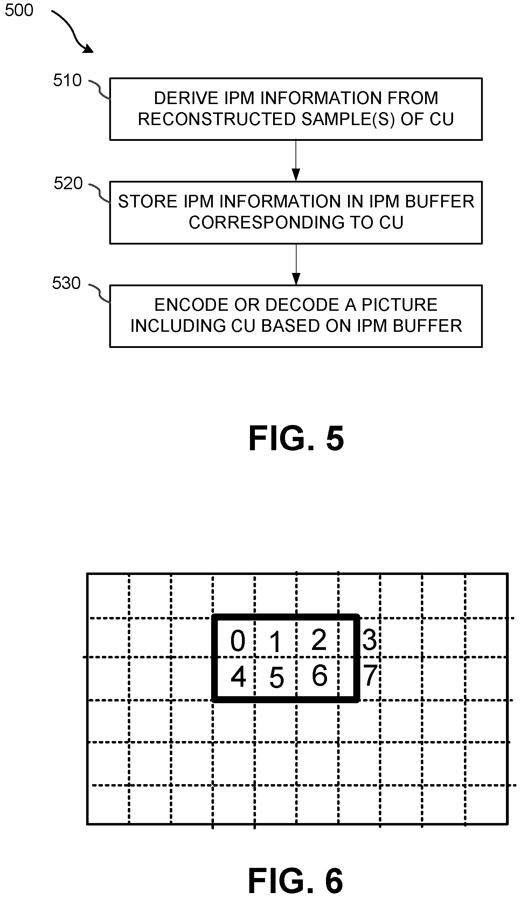

FIG. 5 is a flowchart of an example method 500 for video encoding or decoding according to some embodiments. As an example, the method 500 described herein is performed by an encoder 200 (shown in FIG. 2) or by a decoder 300 (shown in FIG. 3). The method 500 is described herein as being performed by an electronic processor (e.g., processor 110) of the encoder 200 or the decoder 300.

At block 510, the method 500 includes deriving IPM information from one or more reconstructed samples of a CU. When the current CU is being coded using an intra prediction mode, the electronic processor does not store the selected IPM for coding the current CU. Rather, the electronic processor derives the IPM information from one or more reconstructed samples of the CU. Example methods for deriving IPM information from one or more reconstructed samples of the CU are provided below.

At block 520, the method 500 includes storing the IPM information in the IPM buffer corresponding to the CU. The electronic processor stores the derived IPM information from the one or more reconstructed samples in the IPM buffer corresponding to the frame of the CU.

At block 530, the method 500 includes encoding or decoding a picture including the CU based on the IPM buffer. As discussed above in method 400 (e.g., at blocks 420 and 440), the IPM information from the IPM buffer may be used for coding or encoding future CUs.

In some embodiments, the IPM information me be derived based on a grid size or cell size. In the method 400, a single IPM value (i.e., IPM information) is stored in the IPM buffer for the current CU. In the method 500 the computation (i.e., derivation) of IPMs and storage to the collocated IPM buffer cell size may be tailored since the IPM information is derived from reconstructed samples. For example, a set of different IPM values may be derived from the reconstructed samples collocated with one IPM cell in the IPM buffer. FIG. 6 illustrates one example of how this may be implemented. Eight IPM values may be derived with reconstructed samples collocated to eight cells 0-7. However, in case a cell of a reconstructed sample does not overall exactly with the corresponding cell of the current CU (e.g., cells 3 and 7 in FIG. 6), only a subset of current CU reconstructed samples may be used. IPM information is therefore derived based on the IPM buffer grid size or cell size.

In some embodiments, the IPM information may be derived similarly as decoder intra mode derivation (DIMD) on the one or more reconstructed samples as described below. For example, the IPM information may be derived from the gradients of some of the reconstructed samples of the CU. A histogram of gradient may be generated and the IPM information is derived as the higher bin of the histogram.

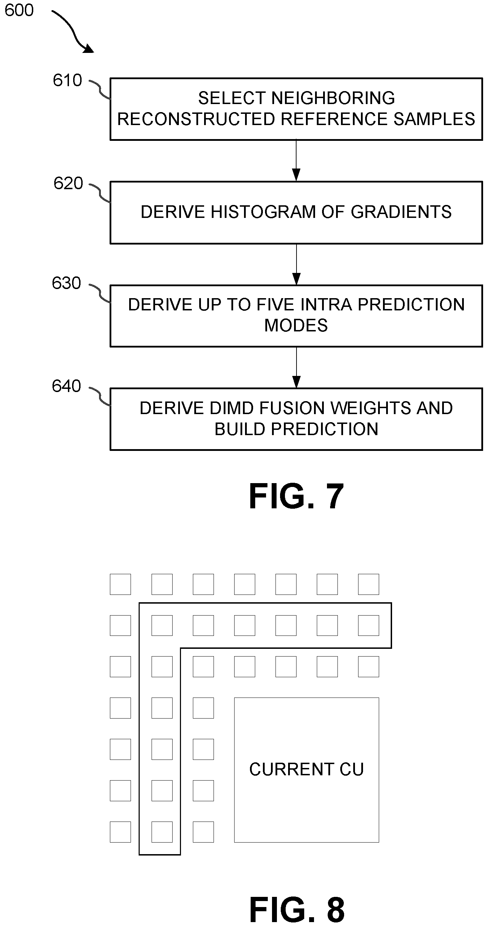

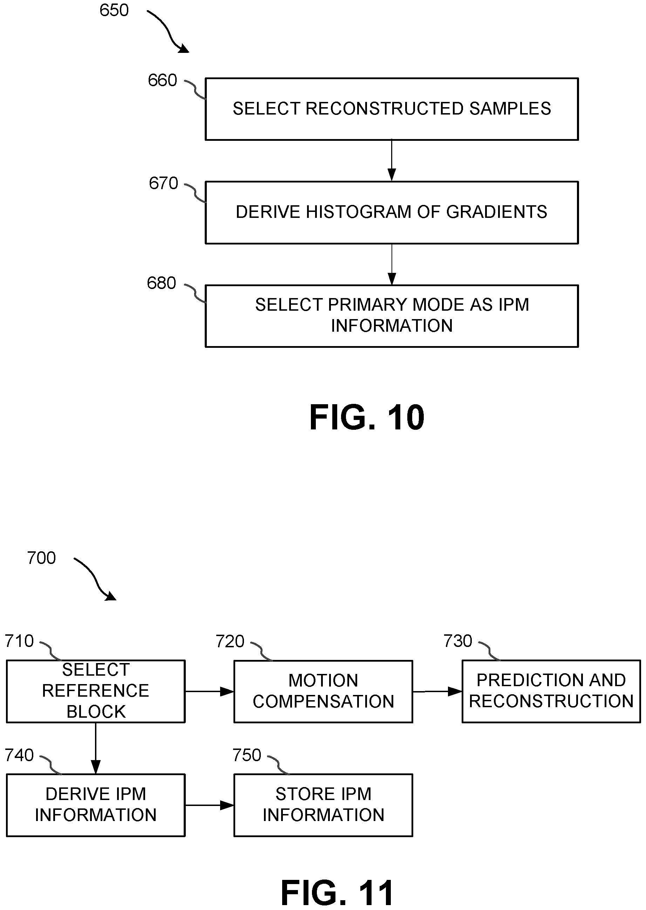

When DIMD is applied, up to five intra prediction modes (e.g., five predictors) are derived from the reconstructed neighbor samples by analyzing the directionality of the content in the surrounding of the CU. The five predictors are combined with a non-directional predictor (planar or block vector based predictor) with weights derived from a histogram of gradients (HoG). The intra prediction mode from the combined predictors may be selected based on the template cost. FIGS. 7-9 illustrate one example of the DIMD process according to some examples. This process may be adapted to derive the IPM information as described in FIG. 10 below.

FIG. 7 is a flowchart of an example method 600 for decoder intra mode derivation (DIMD) according to some embodiments. As an example, the method 600 described herein is performed by an encoder 200 (shown in FIG. 2) or by a decoder 300 (shown in FIG. 3). The method 600 is described herein as being performed by an electronic processor (e.g., processor 110) of the encoder 200 or the decoder 300.

At block 610, the method 600 includes selecting neighboring reconstructed reference samples. A three-sample wide/high L-shaped template formed of already reconstructed samples as shown in FIG. 8 can be selected for DIMD.

At block 620, the method 600 includes deriving HoG. HoG may be obtained using a Sobel filter, accumulating the magnitudes of all gradients at a given direction, for all the samples within the selected region in FIG. 8.

At block 630, the method 600 include deriving up to five intra prediction modes. The five directions with highest cumulative magnitude are selected as main and secondary DIMD modes (e.g., the five intra prediction modes).

At block 640, the method 600 includes deriving DIMD fusion weights and building a prediction. The predictors obtained with the DIMD modes are blended to form a final DIMD prediction. Uniform or spatial blending may be used, where the DIMD predictors are combined with a non-directional predictor, using weights that depend on the relative magnitudes of the modes in the HoGs. The division operations in weight derivation may be performed utilizing the same lookup table (LUT) based integerization scheme as used by, for example, Cross Component Linear Model (CCLM). For example, the division operation in the orientation calculation $Orient = G_y/G_x$ is computed by the following LUT-based scheme:

$$X = \text{Floor}(\text{Log}_2(G_x))$$

$$\text{normDiff} = ((G_x << 4) >> x) \,\&\, 15$$

$$x \mathrel{+}= (3 + (\text{normDiff} \mathrel{!=} 0) \,?\, 1 : 0)$$

$$Orient = (G_y * (\text{DivSigTable}[\text{normDiff}] \,|\, 8) + (1 << (x-1))) >> x$$

where DivSigTable[16] = {0, 7, 6, 5, 5, 4, 4, 3, 3, 2, 2, 1, 1, 1, 1, 0}

For a block of size W×H, the weight for each of the five derived modes is modified if the above or the left (e.g., in the selected neighboring reconstructed reference samples) histogram magnitudes is twice larger than the other one. In this case, the weights are location dependent and may be computed as follows:

If the above histogram is twice the left, then:

$$w_i(x, y) = wDimd_i + \Delta_i - 2\Delta_i \frac{y}{(H - 1)}$$

If the left histogram is twice the above, then:

$$w_i(x, y) = wDimd_i + \Delta_i - 2\Delta_i \frac{x}{(W - 1)}$$

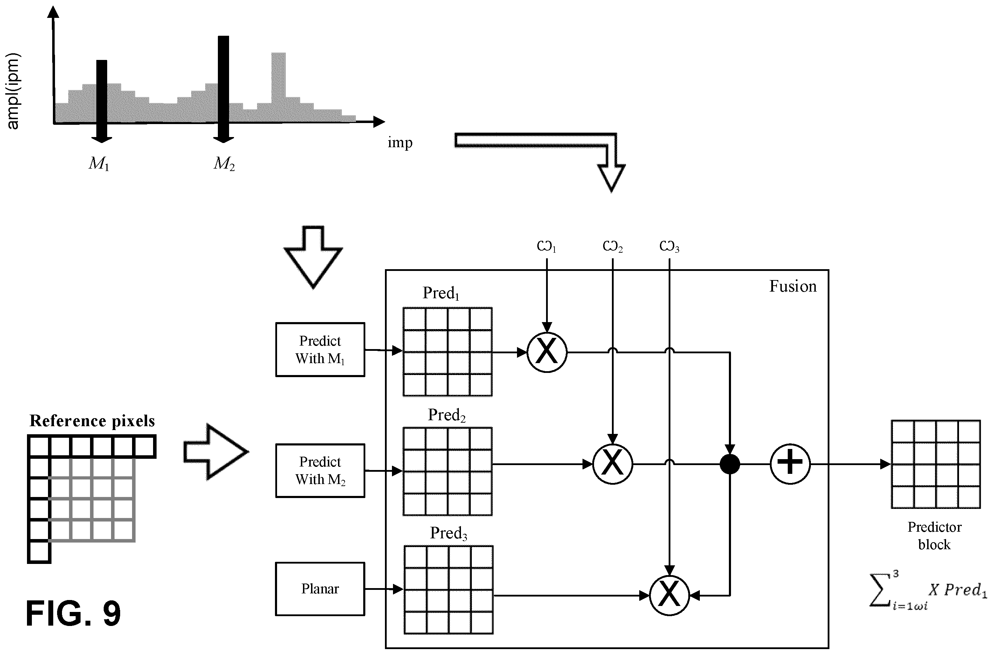

Wherein $wDimd_i$ is the unmodified uniform weight of the DIMD, $\Delta_i$ is pre-defined and set to 10, the weight of planar is fixed to 21/64 (~1/3). The remaining weight of 43/64 (~2/3) is then shared between the two HoG IPMs, proportionally to the amplitude of their HoG bars as shown in FIG. 9. The HoG equations are provided below:

$$\omega_1 = \frac{43}{64} \times \frac{ampl(M_1)}{ampl(M_1) + ampl(M_2)}$$

$$\omega_2 = \frac{43}{64} \times \frac{ampl(M_2)}{ampl(M_1) + ampl(M_2)}$$

$$\omega_3 = \frac{21}{64}$$

Derived intra prediction modes are included into the primary list of intra most probable modes (MPM). In some examples, the DIMD process may be performed before the MPM list is constructed. The primary derived intra mode of a DIMD block is stored in the IPM buffer and is used for MPM list construction of the neighboring blocks.

The region of neighboring reconstructed samples used for computing the histogram of gradients may be depending on reconstructed samples availability. The region of decoded reference samples of current WxH luma CB may be extended towards the above-right side if available, up to W additional columns. The region may be extended towards the bottom-left side if available, up to H additional rows.

FIG. 10 is a flowchart of an example method 650 for deriving IPM information using a histogram of gradients on reconstructed samples of the CU according to some embodiments. As an example, the method 650 described herein is performed by an encoder 200 (shown in FIG. 2) or by a decoder 300 (shown in FIG. 3). The method 650 is described herein as being performed by an electronic processor (e.g., processor 110) of the encoder 200 or the decoder 300.

At block 660, the method 650 includes selecting reconstructed samples. One or more reconstructed samples of the CU or a reference picture may be selected to derive the IPM information.

At block 670, the method 650 includes deriving HoG. HoG may be obtained using a Sobel filter, accumulating the magnitudes of all gradients at a given direction, for all the selected samples similarly as described above with respect to DIMD.

At block 680, the method 650 include selecting the primary mode as the IPM information. In one example, the direction having the highest magnitude (i.e., maximum HoG amplitude) may be selected as the IPM information and stored in the IPM buffer. The selection process may be similarly performed as shown in FIG. 9, for example, selecting the direction with the highest amplitude.

In some embodiments, the IPM information is derived after reconstructing a set of CUs of a frame, where the set includes the current CU. In one example, the IPM information for the current CU is derived after the frame of the current CU is fully reconstructed. When decoding a CU coded in intra prediction mode, the building of the list of MPMs uses the IMP information for the neighboring CUs coded in intra and propagated IPM information for the neighboring CUs coded in inter prediction mode. The propagated IPM information is derived from the reconstructed samples in the references picture after decoding the reference picture. For example, the IPM information is stored (e.g., when CU is coded in intra) or the IPM information is propagated (e.g., when CU is coded in inter) into the IPM buffer at the CU decoding stage. When all the CUs have been reconstructed, a value of IPM information is derived from the reconstructed samples for all the CUs and IPM information is stored into the IPM buffer. The IPM information may be propagated for the CUs coded in inter in the next frames using the current frame as a reference.

In one example, the reconstructed samples used to derive the IPM information of a given IPM buffer cell is tailored (or exactly tailored) to the cell size or grid size, independently of the CU sizes.

In some embodiments, IPM information may not be propagated for CUs coded using inter prediction mode. For example, derived first IPM information is stored in the IPM buffer in response to a first CU being coded using intra prediction. Second IPM information is derived from at least one reference block used for motion compensation in response to a second CU being coded using inter prediction. The second IPM information may be derived from one or more samples of the reference block. In some examples, the second IPM information may be derived from one or more samples of a motion compensated reference block. The first IPM information is stored in the IPM buffer corresponding to the first CU and the second IPM information is stored in the IPM buffer corresponding to the second CU.

FIG. 11 is a flowchart of an example method 700 for deriving IPM information from a reference block for a CU coded using inter prediction mode according to some embodiments. As an example, the method 700 described herein is performed by an encoder 200 (shown in FIG. 2) or by a decoder 300 (shown in FIG. 3). The method 700 is described herein as being performed by an electronic processor (e.g., processor 110) of the encoder 200 or the decoder 300.

At block 710, the method 700 includes selecting a reference block. The electronic processor may select a reference block from the reference picture buffer to be used for reconstructing the current CU using inter prediction mode.

At block 720, the method 700 includes performing motion compensation. Motion compensation is performed to generate a motion compensated reference block for reconstructing the current CU using inter prediction mode.

At block 730, the method 700 includes performing prediction and reconstruction of the current CU. The motion compensated reference block is used to reconstruct the current CU.

At block 740, the method 700 includes deriving IPM information from the selected reference block. The electronic processor may derive the IPM information from one or more CUs of the selected reference block, for example, using any of the IPM information derivation techniques derived herein. In one example, the IPM information may be derived from the motion compensated reference block rather than the original selected reference block.

At block 750, the method 700 includes storing the IPM information. The IPM information derived from the selected reference block or from the motion compensate reference block is stored in the IPM buffer. In the example of method 700, propagation of IPM information is not performed for CUs coded in inter prediction mode.

Returning to FIGS. 2 and 3, reconstructed samples of the CUs are passed through in-loop filters 265, 365, for example, one or more of a deblocking filter, a sample adaptive offset (SAO) filter, an adaptive loop filter (ALF) or the like (e.g., in-loop post filter(s)). In one example, the IPM information is derived from the one or more reconstructed samples before the deblocking filter is applied to the one or more reconstructed samples. In one example, the IPM information is derived from the one or more reconstructed samples after the deblocking filter is applied to the one or more reconstructed samples. In one example, the IPM information is derived from the one or more reconstructed samples before the SAO filter is applied to the one or more reconstructed samples. In one example, the IPM information is derived from the one or more reconstructed samples after the SAO filter is applied to the one or more reconstructed samples. In one example, the IPM information is derived from the one or more reconstructed samples before the ALF is applied to the one or more reconstructed samples. In one example, the IPM information is derived from the one or more reconstructed samples after the ALF is applied to the one or more reconstructed samples. In one example, the IPM information is derived from the one or more reconstructed samples after at least one in-loop post-filter is applied to the one or more reconstructed samples.

In some embodiments, the IPM information is derived after applying an inverse LUT of LMCS to the one or more reconstructed samples. Luma Mapping with Chroma Scaling (LMCS) includes two components: luma mapping (LM) and luma-dependent chroma residue scaling (CS). Better use of the range of luma code values allowed at a specified bit depth can be achieved using luma mapping. The luma mapping component of LMCS provides a process of reallocating the signal-domain luma code values within all or part of the full range of luma code values allowed in the coding domain.

The chroma residue scaling component of LMCS compensates for the interaction between the luma signal and its corresponding chroma signals. The quantization parameter (QP) applied to the chroma residue signal depends on the value of the corresponding luma signal. When the luma mapping component of LMCS is enabled, the luma value in the coding domain may be different than the luma value in the original signal domain. As a result, the value of chroma QP may not be optimal. The chroma residue scaling component of LMCS aims at compensating this defect by making luma-dependent adjustments to the values of the chroma residue signals within a chroma coding block.

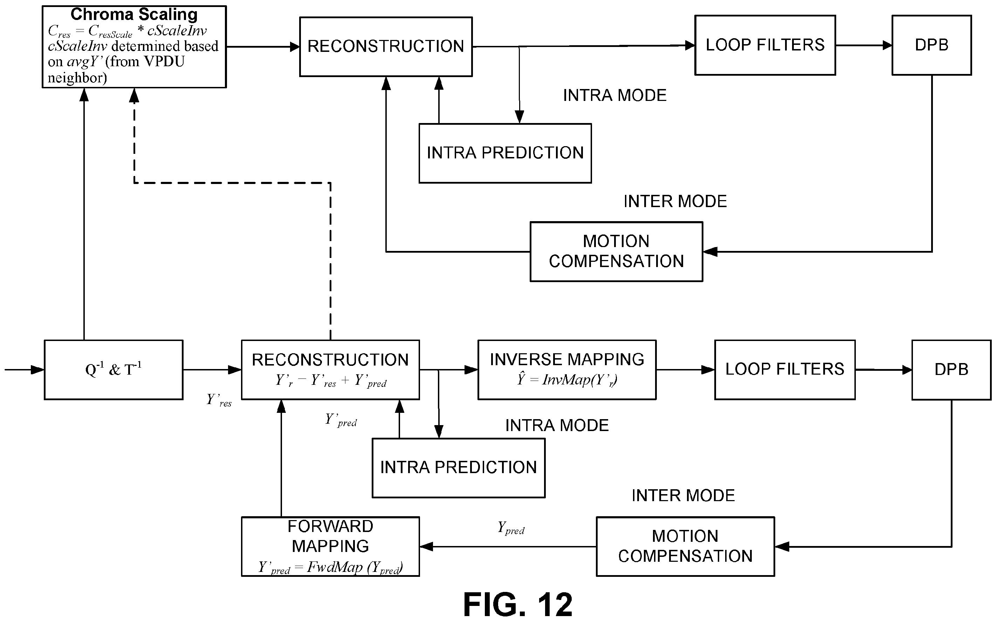

The luma mapping may be carried out with a forward and an inverse LUT as shown in FIG. 12. In the DPB, the reference pictures are stored at their original mapping (e.g., no mapping). At the encoder, the fwdLUT (e.g., Forward Mapping in FIG. 12) may re-map the original luma range. The image is then encoded, and the reconstructed frames are invLUT (e.g., Inverse Mapping in FIG. 12) before storage into the DPB.

In some embodiments, the IPM information is derived based on a coding parameter of the CU. For example, the method used for driving the IPM information may vary based on a condition. The condition may vary with the coding parameter(s) of the current CU. For example, the IPM information may be derived from the selected intra prediction mode for current CU (as performed in blocks 420 and 430 of method 400) when current CU is coded using mode-A (i.e., coding parameter). In all other situations, the IPM information is derived from reconstructed samples of the CUs as described with respect to method 400. The condition selects whether the IPM information may be derived from the reconstructed samples of the current CU or whether a different method should be used (e.g., method 400, propagation IPM, etc.).

In one example, the IPM information is derived from the selected intra prediction mode for current CU (as performed in blocks 420 and 430 of method 400) when mode-A equals intra mode. When mode-A is not intra mode (e.g., inter mode), IPM information is derived from reconstructed sample(s) of the current CU. In another example, IPM information is derived from reconstructed sample(s) of the current CU when mode-A equals intra mode. When mode-A is not intra mode (e.g., inter mode), IPM information is derived from the selected intra prediction mode for current CU (as performed in blocks 420 and 430 of method 400).

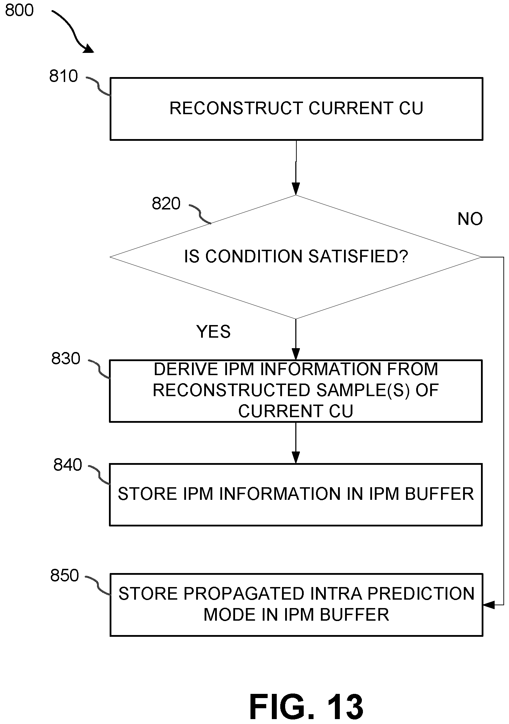

FIG. 13 is a flowchart of an example method 800 for video encoding or decoding according to some embodiments. As an example, the method 800 described herein is performed by an encoder 200 (shown in FIG. 2) or by a decoder 300 (shown in FIG. 3). The method 800 is described herein as being performed by an electronic processor (e.g., processor 110) of the encoder 200 or the decoder 300.

At block 810, the method 800 includes reconstructing the current CU. The electronic processor uses the selected intra prediction mode from the list of MPMs to reconstruct the current CU. The index for the selected intra prediction mode is signaled, which is used by the electronic processor to reconstruct the current CU.

At block 820, the method 800 includes determining whether a condition is satisfied. The electronic processor determines whether, for example, the CU is coded using mode-A as described above. When the condition is satisfied, the method 800 proceed to blocks 830 and 840. When the condition is not satisfied, the method 800 proceeds to block 850.

At block 830, the method 800 includes deriving IPM information from one or more reconstructed samples of a CU. At block 840, the method 800 includes storing the IPM information in the IPM buffer corresponding to the CU. For example, method 500 may be performed in response to the condition being satisfied at block 820.

At block 850, the method 800 includes deriving IPM information using other methods. For example, the method 400 (e.g., blocks 430-460) may be performed in response to condition not being met.

In some embodiments, the condition may depend on whether or not a particular type of intra prediction mode (e.g., mode intra Planar, mode intra DC, etc.) is used for coding the current CU. The coding parameter, for example, mode-A may include any one of mode intra planar, mode intra DC, and/or intra block copy. The coding parameter may also include any one of size of CU satisfying a size threshold, CU with coded residuals, CU without coded residuals, a reference picture having a POC distance to current POC distance satisfying a predetermined distance threshold, a reference picture having QP value different with current QP value satisfying a predetermined QP threshold, and/or current temporal identifier satisfying a temporal identifier threshold.

In some embodiments, the validity of the derived IPM information may be determined based on at least one condition. For example, determining whether the IPM information is valid includes comparing an amplitude of a mode HoG to a threshold. The IPM information is determined to be invalid in response to the amplitude falling below (or equal to) the threshold. The IPM information is determined to be invalid in response to the amplitude exceeding (or equal to) the threshold.

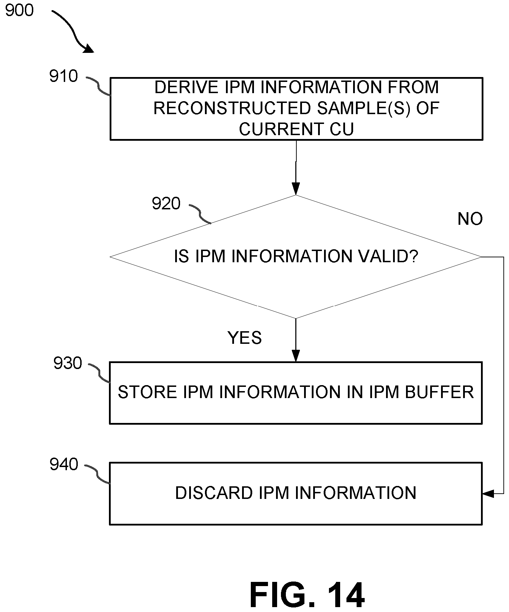

FIG. 14 is a flowchart of an example method 900 for video encoding or decoding according to some embodiments. As an example, the method 900 described herein is performed by an encoder 200 (shown in FIG. 2) or by a decoder 300 (shown in FIG. 3). The method 800 is described herein as being performed by an electronic processor (e.g., processor 110) of the encoder 200 or the decoder 300.

At block 910, the method 900 includes deriving IPM information from one or more reconstructed samples of the current CU. The IPM information may be derived from reconstructed samples of the current CU based on any of the methods described above. In one example, the IPM information may be derived from the reconstructed samples regardless of whether the current CU is coded in intra mode prediction or inter mode prediction.

At block 920, the method 900 includes determining whether the IPM information is valid. The electronic processor determines whether the derived IPM information is valid. For example, the IPM information derived using a histogram of gradients similarly as DIMD may result in the amplitude of HoG falling below a usable threshold. In these situations, the derived IPM information may not be valid. For example, the amplitude (A) of the main mode M0 (primary) of HoG should be at least superior to $thres0 \times A1$ (e.g., $thres0 = 2$), where A1 is the amplitude of the secondary mode M1. When amplitude is below the threshold (i.e., $A < thres0 \times A1$) then the derived IPM information is not valid. When the amplitude is above the threshold (i.e., $A >= thres0 \times A1$) then the derived IPM information is valid. In another example, the difference (Diff) between M0 and M1 (secondary) should be superior to another threshold thres1 (e.g., $thres1 = 2$). When either of the above condition is not satisfied (i.e., $A < thres0 \times A1 \parallel Diff < thres1$), the derived IPM information is invalid. When both the above conditions are satisfied (i.e., $A < thres0 \times A1 \&\& Diff < thres1$), the derived IPM information is valid. When the IPM information is valid, the method 900 proceeds to block 930. When the IPM information is invalid, the method 900 proceed to block 940.

At block 930, the method 900 includes storing the IPM information in the IPM buffer corresponding to the CU. At block 940, the method 900 includes discarding the IPM information. For example, the IPM buffer may not be updated or the IPM information may be derived using a different method, for example, method 400.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Example 1. A computer-implemented method for video encoding or decoding comprising: deriving intra prediction mode -IPM- information from one or more reconstructed samples of a coding unit; storing the IPM information in an IPM buffer corresponding to the coding unit; and encoding or decoding a picture including the coding unit based on the IPM buffer.

Example 2. The computer-implemented method of example 1, wherein deriving the IPM information includes deriving the IPM information based on a grid size of the IPM buffer.

Example 3. The computer-implemented method of example 2, wherein deriving the IPM information based on the grid size includes deriving the IPM information from the one or more reconstructed samples collocated within one cell of the IPM buffer.

Example 4. The computer-implemented method of example 2, wherein deriving the IPM information based on the grid size includes deriving the IPM information from a subset of reconstructed samples for the coding unit.

Example 5. The computer-implemented method of any of examples 1-4, wherein deriving the IPM information includes deriving the IPM information using a histogram of gradients on the one or more reconstructed samples.

Example 6. The computer-implemented method of example 5, wherein deriving the IPM information using the histogram of gradients on the one or more reconstructed samples includes selecting a direction with a highest cumulative magnitude as the IPM information.

Example 7. The computer-implemented method of any of examples 1-6, wherein deriving the IPM information includes deriving the IPM information after reconstructing a set of coding units of the picture, the set of coding units including the coding unit.

Example 8. The computer-implemented method of any of examples 1-7, wherein storing the IPM information in the IPM buffer includes storing the IPM information in the IPM buffer in response to the coding unit being coded using intra prediction.

Example 9. The computer-implemented method of example 8, further comprising: deriving second IPM information from at least one reference block used for motion compensation in response to a second coding unit being coded using inter prediction; and storing second IPM information in the IPM buffer corresponding to the second coding unit.

Example 10. The computer-implemented method of example 9, wherein deriving the second IPM information from the at least one reference block includes deriving the second IPM information from one or more samples of the reference block.

Example 11. The computer-implemented method of example 9, wherein deriving the second IPM information from the at least one reference block includes deriving the second IPM information from one or more samples of a motion compensated reference block.

Example 12. The computer-implemented method of any of examples 1-11, wherein deriving the IPM information includes deriving the IPM information before applying a deblocking filter to the one or more reconstructed samples.

Example 13. The computer-implemented method of any of examples 1-12, wherein deriving the IPM information includes deriving the IPM information after applying a deblocking filter to the one or more reconstructed samples.

Example 14. The computer-implemented method of any of examples 1-13, wherein deriving the IPM information includes deriving the IPM information after applying an inverse LUT of LMCS to the one or more reconstructed samples.

Example 15. The computer-implemented method of any of examples 1-14, wherein deriving the IPM information includes deriving the IPM information after applying at least one in-loop post filter to the one or more reconstructed samples.

Example 16. The computer-implemented method of any of examples 1-15, wherein deriving the IPM information includes deriving the IPM information based on a coding parameter of the coding unit.

Example 17. The computer-implemented method of example 16, wherein the coding parameter includes a prediction mode of the coding unit and wherein deriving the IPM information based on the prediction mode includes deriving the IPM information from the one or more reconstructed samples in response to the prediction mode being intra prediction mode.

Example 18. The computer-implemented method of example 16, wherein the coding parameter includes an intra prediction mode.

Example 19. The computer-implemented method of example 16, wherein the coding parameter includes a prediction mode of the coding unit and wherein deriving the IPM information based on the prediction mode includes selectively deriving the IPM information from the one or more reconstructed samples or IPM propagation based on the prediction mode.

Example 20. The computer-implemented method of example 19, wherein the coding parameter includes at least one selected from a group consisting of mode intra planar, mode intra DC, intra block copy, size of coding unit satisfying a size threshold, coding unit with coded residuals, coding unit without coded residuals, a reference picture having a POC distance to current POC distance satisfying a predetermined distance threshold, a reference picture having quantization parameter -QP- value different with current QP value satisfying a predetermined QP threshold, and current temporal identifier satisfying a temporal identifier threshold.

Example 21. The computer-implemented method of any of examples 1-20, further comprising determining, based on at least one condition, whether the derived IPM information is valid.

Example 22. The computer-implemented method of example 21, wherein determining whether the derived IPM information is valid includes comparing an amplitude of a mode of Histogram of Gradients -HoG- to a threshold, and determining the derived IPM information as being invalid in response to the amplitude falling below the threshold.

Example 23. A device including an encoder configured to perform a method according to any of examples 1-22.

Example 24. A device including a decoder configured to perform a method according to any of examples 1-22.

Example 25. A non-transitory computer-readable medium comprising instructions that, when executed by an electronic processor, causes the electronic processor to perform the method of any of examples 1-22.

Various methods and aspects described herein can be used to modify one or more modules. For example, the intra predictors and inter predictors described with respect to FIGS. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.  A computer-implemented method for video encoding or decoding comprising:

    deriving intra prediction mode -IPM- information from one or more reconstructed samples of a coding unit;
    storing the IPM information in an IPM buffer corresponding to the coding unit; and
    encoding or decoding a picture including the coding unit based on the IPM buffer.

2.  The computer-implemented method of claim 1, wherein deriving the IPM information includes deriving the IPM information based on a grid size of the IPM buffer; and

    wherein deriving the IPM information based on the grid size includes deriving the IPM information from the one or more reconstructed samples collocated within one cell of the IPM buffer; or
    wherein deriving the IPM information based on the grid size includes deriving the IPM information from a subset of reconstructed samples for the coding unit.

3.  The computer-implemented method of any of the preceding claims, wherein deriving the IPM information includes deriving the IPM information using a histogram of gradients on the one or more reconstructed samples; and
    wherein deriving the IPM information using the histogram of gradients on the one or more reconstructed samples includes selecting a direction with a highest cumulative magnitude as the IPM information.

4.  The computer-implemented method of any of the preceding claims, wherein deriving the IPM information includes deriving the IPM information after reconstructing a set of coding units of the picture, the set of coding units including the coding unit.

5.  The computer-implemented method of any of the preceding claims, wherein storing the IPM information in the IPM buffer includes storing the IPM information in the IPM buffer in response to the coding unit being coded using intra prediction, the method further comprising:

    deriving second IPM information from at least one reference block used for motion compensation in response to a second coding unit being coded using inter prediction; and
    storing second IPM information in the IPM buffer corresponding to the second coding unit,

further optionally wherein deriving the second IPM information from the at least one reference block includes deriving the second IPM information from one or more samples of the reference block,
further optionally wherein deriving the second IPM information from the at least one reference block includes deriving the second IPM information from one or more samples of a motion compensated reference block.

6. The computer-implemented method of any of the preceding claims, wherein deriving the IPM information includes deriving the IPM information before applying a deblocking filter to the one or more reconstructed samples.

7. The computer-implemented method of any of the preceding claims, wherein deriving the IPM information includes deriving the IPM information after applying a deblocking filter to the one or more reconstructed samples.

8. The computer-implemented method of any of the preceding claims, wherein deriving the IPM information includes deriving the IPM information after applying an inverse LUT of LMCS to the one or more reconstructed samples.

9. The computer-implemented method of any of the preceding claims, wherein deriving the IPM information includes deriving the IPM information after applying at least one in-loop post filter to the one or more reconstructed samples.

10. The computer-implemented method of any of the preceding claims, wherein deriving the IPM information includes deriving the IPM information based on a coding parameter of the coding unit;

   wherein the coding parameter includes a prediction mode of the coding unit and wherein deriving the IPM information based on the prediction mode includes deriving the IPM information from the one or more reconstructed samples in response to the prediction mode being intra prediction mode; or
   wherein the coding parameter includes an intra prediction mode.

11. The computer-implemented method of claim 10, wherein the coding parameter includes a prediction mode of the coding unit and wherein deriving the IPM information based on the prediction mode includes selectively deriving the IPM information from the one or more reconstructed samples or IPM propagation based on the prediction mode, wherein the coding parameter includes at least one selected from a group consisting of mode intra planar, mode intra DC, intra block copy, size of coding unit satisfying a size threshold, coding unit with coded residuals, coding unit without coded residuals, a reference picture having a POC distance to current POC distance satisfying a predetermined distance threshold, a reference picture having quantization parameter -QP- value different with current QP value satisfying a predetermined QP threshold, and current temporal identifier satisfying a temporal identifier threshold.

12. The computer-implemented method of any of the preceding claims, further comprising determining, based on at least one condition, whether the derived IPM information is valid; and
wherein determining whether the derived IPM information is valid includes

   comparing an amplitude of a mode of Histogram of Gradients -HoG- to a threshold, and
   determining the derived IPM information as being invalid in response to the amplitude falling below the threshold.

13. A device including an encoder configured to perform a method according to any of claims the preceding claims.

14. A device including a decoder configured to perform a method according to any of claims 1-12.

15. A non-transitory computer-readable medium comprising instructions that, when executed by an electronic processor, causes the electronic processor to perform the method of any of claims 1-12.

**FIG. 1**

EP 4 757 312 A1

FIG. 2

EP 4 757 312 A1

**FIG. 3**

400

410 — IS CURRENT CU BEING CODED USING INTRA PREDICTION MODE?

NO

YES

420 — SELECT INTRA PREDICTION MODE FOR CURRENT CU

430 — STORE SELECTED INTRA PREDICTION MODE IN IPM BUFFER

440 — RECONSTRUCT CURRENT CU USING SELECTED INTRA PREDICTION MODE

450 — STORE PROPAGATED INTRA PREDICTION MODE IN IPM BUFFER

460 — RECONSTRUCT CURRENT CU USING INTER PREDICTION MODE

# FIG. 4

500

510

DERIVE IPM INFORMATION FROM
RECONSTRUCTED SAMPLE(S) OF CU

520

STORE IPM INFORMATION IN IPM BUFFER
CORRESPONDING TO CU

530

ENCODE OR DECODE A PICTURE
INCLUDING CU BASED ON IPM BUFFER

# FIG. 5

| 0 | 1 | 2 | 3 |
|---|---|---|---|
| 4 | 5 | 6 | 7 |

# FIG. 6

600

610 — SELECT NEIGHBORING RECONSTRUCTED REFERENCE SAMPLES

620 — DERIVE HISTOGRAM OF GRADIENTS

630 — DERIVE UP TO FIVE INTRA PREDICTION MODES

640 — DERIVE DIMD FUSION WEIGHTS AND BUILD PREDICTION

## FIG. 7

CURRENT CU

## FIG. 8

FIG. 9

650

| 660 | SELECT RECONSTRUCTED SAMPLES |
| 670 | DERIVE HISTOGRAM OF GRADIENTS |
| 680 | SELECT PRIMARY MODE AS IPM INFORMATION |

## FIG. 10

700

| 710 | SELECT REFERENCE BLOCK | 720 | MOTION COMPENSATION | 730 | PREDICTION AND RECONSTRUCTION |

| 740 | DERIVE IPM INFORMATION | 750 | STORE IPM INFORMATION |

## FIG. 11

**Chroma Scaling**
$C_{res} = C_{resScale} * cScaleInv$
$cScaleInv$ determined based on $avgY'$ (from VPDU neighbor)

RECONSTRUCTION

LOOP FILTERS

DPB

INTRA MODE

INTRA PREDICTION

INTER MODE

MOTION COMPENSATION

$Q^{-1}$ & $T^{-1}$

RECONSTRUCTION
$Y'_r - Y'_{res} + Y'_{pred}$

INVERSE MAPPING
$\hat{Y} = InvMap(Y'_r)$

LOOP FILTERS

DPB

$Y'_{res}$

$Y'_{pred}$

INTRA MODE

INTRA PREDICTION

INTER MODE

FORWARD MAPPING
$Y'_{pred} = FwdMap (Y_{pred})$

$Y_{pred}$

MOTION COMPENSATION

**FIG. 12**

800

810 → RECONSTRUCT CURRENT CU

820 → IS CONDITION SATISFIED?

NO

YES

830 → DERIVE IPM INFORMATION FROM RECONSTRUCTED SAMPLE(S) OF CURRENT CU

840 → STORE IPM INFORMATION IN IPM BUFFER

850 → STORE PROPAGATED INTRA PREDICTION MODE IN IPM BUFFER

# FIG. 13

900

910 — DERIVE IPM INFORMATION FROM RECONSTRUCTED SAMPLE(S) OF CURRENT CU

920 — IS IPM INFORMATION VALID?

NO

YES

930 — STORE IPM INFORMATION IN IPM BUFFER

940 — DISCARD IPM INFORMATION

# FIG. 14

Europäisches
Patentamt
European
Patent Office
Office européen
des brevets

# EUROPEAN SEARCH REPORT

**Application Number**

EP 24 30 7038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/146511 A1 (MEDIATEK INC [CN]) 11 July 2024 (2024-07-11) * paragraph [0002] * * paragraph [0011] * * paragraph [0045] - paragraph [0048] * * paragraph [0114] - paragraph [0119] * * paragraph [0129] * * paragraph [0190] * ----- | 1-3,5-9, 12-15 | INV. H04N19/593 H04N19/105 H04N19/176 |
| Y | WO 2023/194556 A1 (INTERDIGITAL CE PATENT HOLDINGS SAS [FR]) 12 October 2023 (2023-10-12) * paragraph [0003] - paragraph [0004] * * paragraph [0120] * * paragraph [0148] - paragraph [0150] * * paragraph [0166] * * paragraph [0173] * ----- | 1,4,10, 11,13-15 | |
| Y | YOUVALARI (XIAOMI) R G ET AL: "AHG 12: OBIC mode from reconstruction", 147. MPEG MEETING; 20240715 - 20240719; SAPPORO; (MOTION PICTURE EXPERT GROUP OR ISO/IEC JTC1/SC29/WG11), , no. m69069 9 July 2024 (2024-07-09), XP030322809, Retrieved from the Internet: URL:https://dms.mpeg.expert/doc_end_user/d ocuments/147_Sapporo/wg11/m69069-JVET-AI02 62-v1-JVET-AI0262-v1.zip JVET-AI0262-v1.docx [retrieved on 2024-07-09] * abstract * * Section 2.1 * ----- | 1,4,10, 11,13-15 | TECHNICAL FIELDS SEARCHED (IPC) H04N |

The present search report has been drawn up for all claims

| Place of search | Date of completion of the search | Examiner |
|---|---|---|
| The Hague | 31 May 2025 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 7038

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2025

| Patent document cited in search report | Publication date | Patent family member(s) | Publication date |
|---|---|---|---|
| WO 2024146511 A1 | 11-07-2024 | NONE | |
| WO 2023194556 A1 | 12-10-2023 | CN 119213762 A | 27-12-2024 |
| | | EP 4505718 A1 | 12-02-2025 |
| | | WO 2023194556 A1 | 12-10-2023 |

EPO FORM P0459

For more details about this annex : see Official Journal of the European Patent Office, No. 12/82